# EUROPÄISCHE PATENTANMELDUNG

(11) **EP 1 331 136 A1**
(43) Veröffentlichungstag der Anmeldung: **30.07.2003**
(21) Anmeldenummer: 02026227.5
(22) Anmeldetag: 26.11.2002
(51) Int. Cl.: B60R 7/04

(54) **Verstellbare Mittel-Ablagebehälter mit Getriebeschaltelement**

(30) Priorität: 24.01.2002 DE 10202578
(71) Anmelder: DaimlerChrysler AG, 70567 Stuttgart (DE)
(72) Erfinder: Bihaule, Bernd, 71134 Aidlingen (DE); Lindemann, Peter, 71120 Grafenau (DE); Zygan, Andreas, Dr., 76316 Malsch (DE)

(57) **Zusammenfassung**

Eine Vorrichtung (5) zur Ablage von Gegenständen für ein Kraftfahrzeug, insbesondere für ein Nutzfahrzeug, weist einen zwischen einem Fahrersitz (3) und einem Beifahrersitz (4) angeordneten, relativ zu einem Fahrzeugboden (10) des Kraftfahrzeugs in Längsrichtung (x) desselben verstellbaren Ablagebehälter (6) auf. An dem Ablagebehälter (6) ist ein Schaltelement (9) zur Steuerung eines Getriebes des Kraftfahrzeugs angeordnet.

## Beschreibung

Die Erfindung betrifft eine Vorrichtung zur Ablage von Gegenständen für ein Kraftfahrzeug nach der im Oberbegriff von Anspruch 1 näher definierten Art.

Eine gattungsgemäße Vorrichtung mit mehreren in Längsrichtung des Kraftfahrzeugs verschieblichen Ablagen ist aus der DE 35 01 714 A1 bekannt.

Die DE 42 36 850 C1 beschreibt eine Ablagekonsole zwischen Fahrer- und Beifahrersitz eines Kraftfahrzeugs, bei welcher Aufnahmemodule vorgesehen sind, die mit einem schlittenartigen Bügel abgedeckt bzw. zugänglich gemacht werden können, um dem Fahrer verschiedene Nutzungsmöglichkeiten der Ablagekonsole zu bieten.

Armauflagen mit daran angebrachten Schaltelementen beschreiben die DE 197 46 438 A1, die DE 196 24 463 A1 oder die DE 37 28 373 C2.

Es ist Aufgabe der vorliegenden Erfindung, eine Vorrichtung zur Ablage von Gegenständen in einem Kraftfahrzeug zu schaffen, welche dem Fahrer einen größeren Nutzwert und eine einfachere Bedienbarkeit des Kraftfahrzeugs bietet.

Erfindungsgemäß wird diese Aufgabe durch die in Anspruch 1 genannten Merkmale gelöst.

Durch das erfindungsgemäß an dem in Längsrichtung verschieblichen Ablagebehälter angebrachte Schaltelement zur Steuerung eines Getriebes ist es für den Fahrer des Kraftfahrzeugs vorteilhafterweise möglich, mit Hilfe einer sehr einfachen Konstruktion einerseits das Schaltelement in eine für ihn ergonomisch günstige Position zu bringen und andererseits, beispielsweise um einen freien Durchstieg im Tunnelbereich zwischen den beiden Sitzen zu erreichen, den Ablagebehälter zu verschieben. Während der Fahrt bietet der Ablagebehälter darüber hinaus eine Möglichkeit, den Arm abzulegen, so daß ein bequemes Fahren möglich wird.

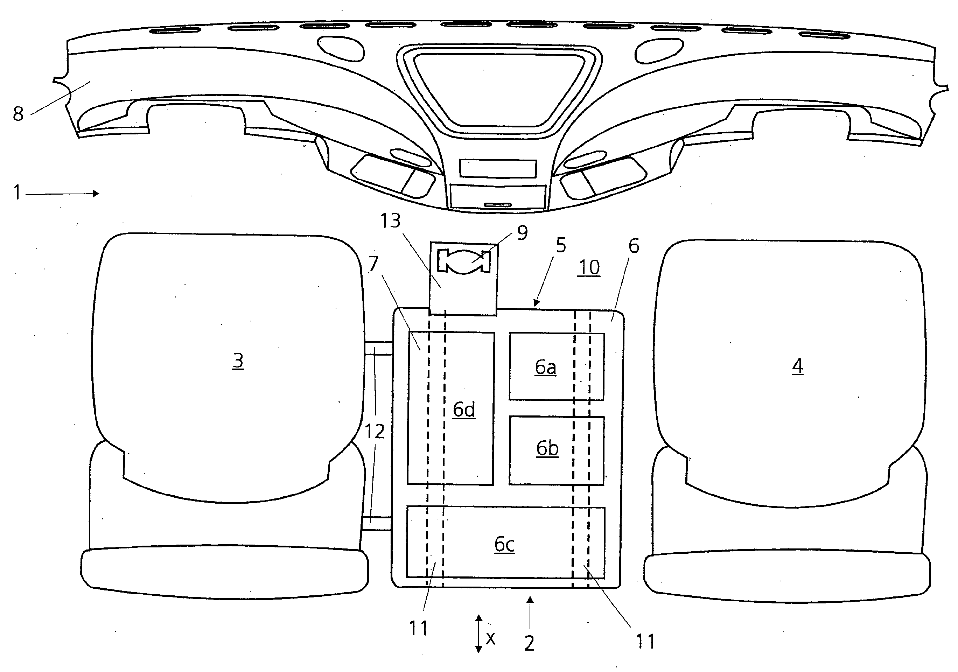

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Die einzige Figur zeigt in sehr schematischer Darstellung eine Draufsicht auf den Innenraum eines Kraftfahrzeugs mit der sich darin befindlichen erfindungsgemäßen Vorrichtung zur Ablage von Gegenständen.

In einem Innenraum 1 eines in seiner Gesamtheit nicht dargestellten Kraftfahrzeugs, im vorliegenden Fall eines Nutzfahrzeugs, ist in einem sogenannten Tunnelbereich 2 zwischen einem Fahrersitz 3 und einem Beifahrersitz 4 eine Vorrichtung 5 zur Ablage von nicht dargestellten Gegenständen angeordnet.

Die Vorrichtung 5 weist einen Ablagebehälter 6 mit mehreren Ablagefächern 6a, 6b und 6c sowie einem Armauflageelement 7 auf, welches zur Aufnahme des Arms eines auf dem Fahrersitz 3 sitzenden, nicht dargestellten Fahrers vorgesehen ist. Der Ablagebehälter 6 ist in Längsrichtung des Kraftfahrzeugs entlang des mit "X" bezeichneten Doppelpfeils verschiebbar.

An der einem ebenfalls in dem Innenraum 1 sich befindlichen Armaturenbrett 8 zugewandten Seite des Ablagebehälters 6 ist ein im vorliegenden Fall als Schalthebel ausgebildetes Schaltelement 9 angeordnet, welches zur Steuerung bzw. Betätigung eines nicht dargestellten Getriebes des Kraftfahrzeugs dient. Es kann sich bei dem Schaltelement 9 in an sich bekannter Weise um ein mechanisch, elektropneumatisch oder ähnlich wirkendes Betätigungselement bzw. ein Gebergerät handeln.

Die oben beschriebene Verschiebbarkeit des Ablagebehälters 6 wird im vorliegenden Fall durch auf einem Fahrzeugboden 10 angeordnete Führungsschienen 11 gewährleistet, in welchen der Ablagebehälter 6 in nicht dargestellter, jedoch an sich bekannter Weise verschieblich gelagert ist. Dadurch, daß das Schaltelement 9 an dem Ablagebehälter 6 angebracht ist, kann der Fahrer das Schaltelement 9 in eine für ihn, d.h. für seine Körpergröße, geeignete Position bringen, wobei das Armauflageelement 7 während der fahrt eine Unterstützung des Arms beim Betätigen des Schaltelements 9 gewährleistet. Im Bereich der Führungsschienen 11 kann auch eine nicht dargestellte Kabelführung für das Schaltelement 9 vorgesehen sein.

Der Ablagebehälter 6 kann entweder völlig unabhängig von der Längsverschiebung des Fahrersitzes 3 verschieblich sein oder, wie im vorliegenden Fall durch Koppelelemente 12 angedeutet, mit dem Fahrersitz 3 lösbar gekoppelt werden. In diesem Zusammenhang ist auch eine elektrische Längsverstellung des Ablagebehälters 6 denkbar, welche dann mit einer eventuell ebenfalls elektrischen Verstellung des Fahrersitzes 3 gekoppelt werden könnte. Die Höhenverstellung des Fahrersitzes 3 wird jedoch unabhängig von dem Ablagebehälter 6 durchgeführt.

Das Armauflageelement 7 ist im vorliegenden Fall als Abdeckung für ein weiteres Ablagefach 6d des Ablagebehälters 6 ausgebildet, welches nach Abnehmen bzw. Wegklappen des Armauflageelementes 7 zugänglich ist. Um den Komfort für den Fahrer zu erhöhen, kann das Armauflageelement 7 auf seiner Oberseite mit einer nicht dargestellten Polsterung versehen sein. Des weiteren ist es möglich, den Ablagebehälter 6 als Aufstiegshilfe für eine nicht dargestellte, hinter den beiden Sitzen 3 und 4 angeordnete Liege zu verwenden.

In der dargestellten Ausführungsform ist das Schaltelement 9 auf einer Konsole 13 angeordnet. Es wäre jedoch auch möglich, das Schaltelement 13 unmittelbar an dem Ablagebehälter 6 anzubringen.

Der hierin verwendete Begriff "Tunnelbereich" bedeutet nicht notwendigerweise, daß in dem Innenraum 1 ein gegenüber dem Fahrzeugboden 10 erhöhter Getriebetunnel vorhanden sein muß. Vielmehr ist der Raum zwischen dem Fahrersitz 3 und dem Beifahrersitz 4 gemeint, so daß auch bei ebenem Fahrzeugboden 10 ein "Tunnelbereich" vorhanden sein kann.

## Patentansprüche

1. Vorrichtung zur Ablage von Gegenständen für ein Kraftfahrzeug, insbesondere für ein Nutzfahrzeug, mit einem zwischen einem Fahrersitz und einem Beifahrersitz angeordneten, relativ zu einem Fahrzeugboden des Kraftfahrzeugs in Längsrichtung desselben verstellbaren Ablagebehälter,
**dadurch gekennzeichnet, daß**
an dem Ablagebehälter (6) ein Schaltelement (9) zur Steuerung eines Getriebes des Kraftfahrzeugs angeordnet ist.

2. Vorrichtung nach Anspruch 1,
**dadurch gekennzeichnet, daß**
der Ablagebehälter (6) an seiner Oberseite ein Armauflageelement (7) aufweist, welches derart angeordnet ist, daß ein darauf liegender Arm eines Fahrers das Schaltelement (9) erreichen kann.

3. Vorrichtung nach Anspruch 2,
**dadurch gekennzeichnet, daß**
das Armauflageelement (7) als Deckel für ein Ablagefach (6d) des Ablagebehälters (6) ausgebildet ist.

4. Vorrichtung nach einem der Ansprüche 1, 2 oder 3,
**dadurch gekennzeichnet, daß**
der Ablagebehälter (6) gegenüber dem Fahrzeugboden (10) in Führungsschienen (11) verschieblich gelagert ist.

5. Vorrichtung nach einem der Ansprüche 1 bis 4,
**dadurch gekennzeichnet, daß**
der Ablagebehälter (6) elektrisch verstellbar ist.

6. Vorrichtung nach einem der Ansprüche 1 bis 5,
**dadurch gekennzeichnet, daß**
das Schaltelement (9) als Schalthebel ausgebildet ist.

7. Vorrichtung nach einem der Ansprüche 1 bis 6,
**dadurch gekennzeichnet, daß**
der Ablagebehälter (6) für seine Längsbewegung mit dem Fahrersitz (3) koppelbar ist.
